# FASCICULE DE BREVET EUROPEEN

(11) **EP 3 595 843 B1**
(45) Date de publication et mention de la délivrance du brevet: **28.04.2021**
(21) Numéro de dépôt: 18718699.4
(22) Date de dépôt: 15.03.2018
(51) Int. Cl.: B23Q 1/70, B23Q 5/10

(54) **ELECTRO-BROCHE COMPACTE**
KOMPAKTES ELEKTRISCHES SPANNFUTTER
COMPACT ELECTRIC CHUCK

(30) Priorité: 17.03.2017 FR 1752225
(43) Date de publication de la demande: 22.01.2020
(73) Titulaire: Fives Machining, 46400 Saint-Laurent-les-Tours (FR)
(72) Inventeur: CAUCHOLS, Clement, 80450 Camon (FR); WAVELET, Clément, 80260 Naours (FR)
(74) Mandataire: Lavoix
(86) Numéro de dépôt international: PCT/EP2018/056562
(87) Numéro de publication internationale: WO 2018/167222

(56) Documents cités:
- EP-A1- 1 252 967
- WO-A1-90/11159

## Description

L'invention est relative au domaine des machines-outils et concerne une électro-broche selon le préambule de la revendication 1 (voir par exemple WO90/11159A1) entraînant l'outil en rotation pour l'usinage de pièces à grande vitesse.

Les machines-outils d'usinage à grande vitesse comportent généralement un outil d'usinage entraîné en rotation par une électro-broche, un système de déplacement de l'électro-broche destiné à la déplacer en translation généralement selon trois axes X, Y et Z formant un repère orthogonal, et en rotation généralement selon deux axes B et C, et un système de commande des organes de la machine pour réaliser les différentes phases de l'usinage des pièces.

Les dimensions des machines-outils et de leurs électro-broches sont proportionnelles à la dureté des matériaux à usiner. Pour les métaux de faible dureté, comme l'aluminium, les pièces sont usinées par de petites électro-broches, tandis que les pièces en métaux durs, par exemple en titane, nécessitent des machines plus imposantes et également plus chères. En effet, on a alors recours à des électro-broches ayant des moteurs plus gros, et des structures de machine plus volumineuses et plus résistantes pour apporter la rigidité nécessaire, supporter le couple de ces électro-broches, et appliquer une force importante sur les pièces à usiner. Ainsi, les électro-broches sont larges et longues, et leurs performances de précision sont parfois délicates à maintenir en raison de leur encombrement.

On connaît des systèmes qui déportent le moteur de l'électro-broche en utilisant des engrenages pour diminuer la taille des broches tout en conservant des précisions acceptables, mais cela au prix d'une complexité mécanique et d'un risque de manque de fiabilité. Il est également possible de rendre plus compacts certains organes de l'électro-broche, tels que l'arrosage centre broche qui se trouve à l'arrière de l'électro-broche ou les systèmes de blocage et déblocage d'outil. Malgré cela, la compacité des électro-broches et la rigidité obtenue ne sont pas toujours satisfaisantes.

La présente invention vise donc à pallier l'inconvénient précité, en proposant notamment une électro-broche compacte permettant d'obtenir un grand couple et une bonne rigidité, tout en conservant des dimensions d'électro-broche et de machine-outil économiquement raisonnables.

A cet effet, l'invention a pour objet une électro-broche pour machine-outil, l'électro-broche comprenant :
- un corps de broche,
- un ensemble rotatif comportant une broche et un rotor,
- un stator fixé dans le corps de broche et configuré pour entraîner en rotation l'ensemble rotatif par rapport au corps de broche autour d'un axe, et
- un équipement de broche et au moins un roulement,
dans laquelle :
- l'ensemble rotatif est creux, et forme un logement s'étendant selon l'axe et traversant au moins en partie le rotor, le logement accueillant au moins partiellement l'équipement de broche, et
- l'ensemble rotatif est guidé en rotation par rapport au corps de broche par le roulement,
le roulement comprenant une bague extérieure fixée sur l'ensemble rotatif, et une bague intérieure fixée sur le corps de broche.

Suivant certains modes de réalisation particuliers, l'électro-broche comprend en outre une ou plusieurs des caractéristiques suivantes, prise(s) isolément ou suivant toutes les combinaisons techniquement possibles :
- l'équipement de broche comprend un système de déblocage d'outil fixé sur le corps de broche ;
- l'équipement de broche comprend un système d'arrosage de centre broche fixé sur le corps de broche ;
- le corps de broche comprend un carter de support, pénétrant dans le logement, et en ce que l'équipement de broche est fixé sur le carter de support ;
- la bague intérieure est fixée sur le carter de support ;
- l'équipement de broche est disposé au moins partiellement à l'intérieur du rotor ;
- un tirant d'outil situé dans le logement ; et
- le rotor est fretté directement sur la broche.

Les caractéristiques et avantages de l'invention apparaîtront à la lecture de la description qui va suivre, donnée uniquement à titre d'exemple, et non limitative, en référence aux dessins annexés, sur lesquels :
- la figure 1 est une vue en coupe schématique d'une électro-broche selon l'art antérieur ; et
- la figure 2 est une vue en coupe schématique d'une électro-broche selon l'invention.

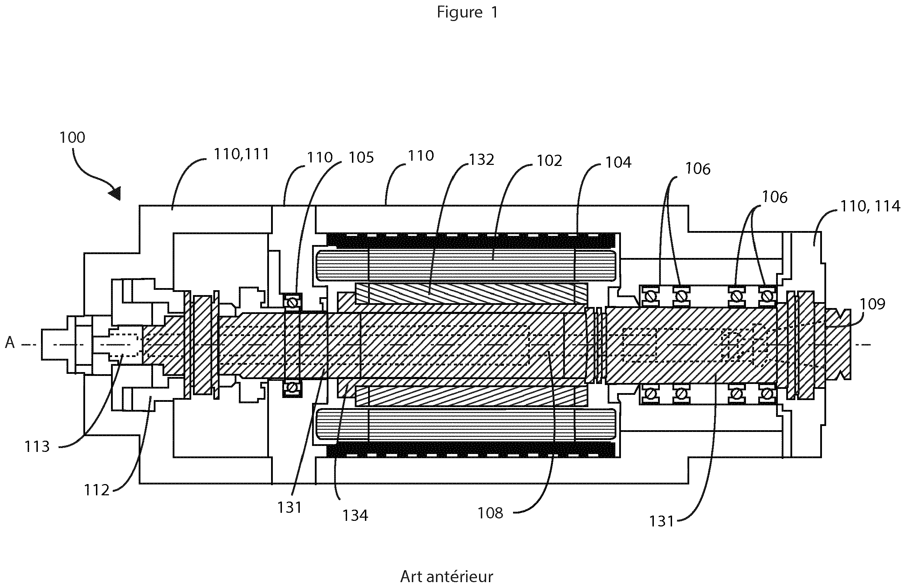

Telle qu'illustrée sur la figure 1, l'électro-broche référencée 100 dans son ensemble est une conception standard des électro-broches montées sur des machines-outils (non représentées).

Elle comporte un corps de broche 110 avec des carters avant 114 et arrière 111. Une broche 131 traverse le corps de broche 110 en son centre selon l'axe A. Sur la broche 131, une pièce intermédiaire 134 permet de recevoir un rotor 132 qui fait le tour de la broche 131.

Dans cet exemple, le rotor 131 est placé sensiblement au centre de la broche 131. La broche 131 est maintenue par l'intermédiaire de roulements 105 et 106 sur le palier arrière et le palier avant. Les bagues intérieures des roulements sont en contact avec la broche 131 tandis que les bagues extérieures en contact avec le corps de broche 110.

Sur la surface intérieure du corps de broche 110 est fixé un stator 102, éventuellement précédé d'une paroi 104 refroidie par une circulation de liquide de refroidissement. Le stator 102 est positionné au niveau du rotor 132. La broche 131 est entrainée en rotation selon l'axe A lorsqu'on alimente le rotor 132.

L'électro-broche 100 possède un système de blocage et de déblocage 112 de l'outil du porte-outil 109 et un système de d'arrosage de centre broche 113. Ces deux système sont classiquement disposés sur la partie arrière du corps de broche 110 dans le carte arrière 111.

Cette configuration permet de maintenir les risques de fuites de liquide de coupe et de refroidissement en dehors de la partie moteur (rotor/stator). Pour arroser l'outil de coupe, la broche 131 est traversée en son centre selon la direction de l'axe A par un canal 108. Ce canal 108 est relié d'un côté au système d'arrosage de centre broche et de l'autre au porte-outil 109.

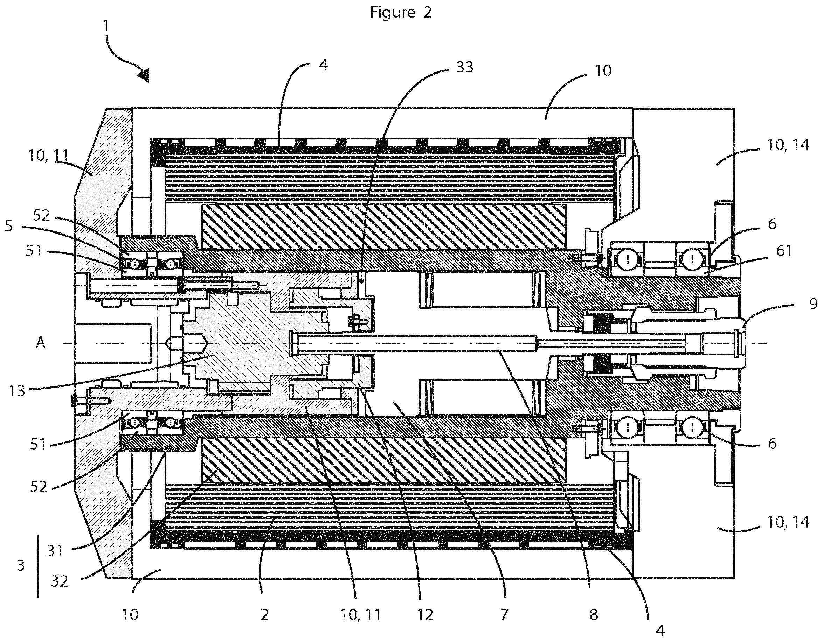

En référence à la figure 2, on décrit une électro-broche 1 selon l'invention pour une machine-outil (non représentée).

Cette électro-broche 1 est composée d'un corps de broche 10 abritant un stator 2, un rotor 32 et une broche 31. Le stator 2 est fixé directement sur une face intérieure du corps de broche 10, ou par l'intermédiaire d'une paroi ventilée 4. Le rotor 32 est fixé sur la broche 31.

Le rotor 32 et la broche 31 forme un ensemble rotatif 3 autour d'un axe A longitudinal de l'électro-broche 1.

Le corps de broche 10 est fermé à ses extrémités longitudinales par un carter support 11 en face arrière, et par un carter avant 14 en face avant maintenant entre autres l'ensemble rotatif 3 dans le corps de broche 10. L'électro-broche 1 est fixée sur la machine-outil (non représentée) par le corps de broche 10.

En face avant, l'électro-broche 1 comprend un porte-outil 9 destiné à accueillir un outil d'usinage (non représenté).

L'électro-broche 1 comprend également des équipements de broche 7, 9, 12 et 13. Un porte-outil 9 est associé à un tirant d'outil 7 et à un système de déblocage d'outil 12. Le tirant d'outil 7 permet de bloquer l'outil dans le porte-outil 9 pour son utilisation dans une phase d'usinage. Le système de déblocage d'outil 12 permet de repousser le tirant d'outil 7 afin qu'il libère l'outil du porte-outil 9 lors de son changement.

Un système d'arrosage centre broche 13 est relié au porte-outil 9 par l'intermédiaire d'un canal d'arrosage 8. Ce système d'arrosage centre broche 13 permet de refroidir l'outil pendant la phase d'usinage et d'apporter du lubrifiant pour l'usinage de pièce.

Dans cet exemple de mise en œuvre de l'invention, la broche 31 et le rotor 32 forment un logement 33 permettant de loger tout ou partie des équipements de broche, par exemple le tirant d'outil 7, le système de déblocage d'outil 12 et le système de l'arrosage centre broche 13. Ainsi ces équipements se trouvent au centre de la broche 31 et du rotor 32. Ces équipements sont fixes par rapport au corps de broche 10. Plus précisément, ces équipements de broches sont fixés sur le carter support 11 ou sur un de ses constituants.

L'ensemble rotatif 3 tourne par rapport au corps de broche 10 autour de l'axe A et autour du tirant d'outil 7, du déblocage d'outil 12 et de l'arrosage centre broche 13.

Le carter support 11 pénètre dans le logement 33 de l'ensemble rotatif 3 pour supporter les équipements de broche 12 et 13. Plusieurs configurations sont possibles pour loger les équipements de broche dans le logement 33. Le carter peut supporter les équipements de broche 12 et 13 sans rentrer dans le logement, ou à l'inverse pénétrer jusqu'au fond du logement 33 tout en contenant lui-même tout ou partie des équipements de broche 12 et 13.

Cette configuration avantageuse permet de diminuer l'encombrement de l'électro-broche, en incorporant dans le logement de la broche 31 des éléments généralement situés dans la partie arrière du corps de broche 10 voire à l'extérieur du corps de broche 10. Cette configuration de la broche 31 avec le logement 33 est possible grâce à l'utilisation d'un rotor 32 et d'un stator 2 à large diamètre.

Pour permettre la rotation de l'ensemble rotatif 3, celui-ci est guidé en rotation par rapport au corps de broche 10 par au moins un roulement 5 comprenant une bague extérieure 52 fixée sur l'ensemble rotatif 3, et une bague intérieure 51 fixée sur le corps de broche 10 ou sur le carter arrière 11.

A l'inverse, des roulements 6 de guidage de l'ensemble rotatif 3 ont une bague intérieure 61 fixée sur la broche 31, et une bague extérieure 62 fixée sur le corps de broche 10 ou sur le carter avant 14.

Dans l'exemple représenté sur la figure 2, deux roulements 5 sont utilisés sur la partie arrière de la broche 31, et deux roulements 6 sont installés en partie avant de la broche.

Selon l'exemple de mise en œuvre de l'invention représenté en figure 2, le rotor 32 est fretté directement sur la broche 31 et n'utilise donc pas de pièce intermédiaire 134. Cette configuration permet de gagner l'épaisseur de la pièce intermédiaire 134 sur le diamètre du couple rotor 32 et stator 2, mais également de bénéficier d'une meilleure conductivité thermique pour conserver l'aimantation du rotor 32.

La chaleur est évacuée vers le centre de la broche 31. Un liquide de refroidissement circule également autour du stator 2 à travers une paroi 104.

Selon une variante non représentée, le porte-outil 9 est également logé à l'intérieur du rotor 32 pour diminuer encore plus la longueur de l'électro-broche 1.

Pour garantir une haute vitesse de rotation de la broche 31, tout ou partie des roulements utilisés sont avantageusement en céramique.

Grâce aux caractéristiques décrites ci-dessus, notamment l'utilisation du rotor 32 et du stator 2 à gros diamètres, un large volume est obtenu au sein de la broche 31 pour loger tout ou partie d'éléments qui sont conventionnellement situés à l'extérieur du moteur. L'invention permet donc à l'électro-broche 1 d'être non seulement puissante, mais également moins longue, ce qui renforce la rigidité de l'électro-broche 1.

## Revendications

1. Electro-broche (1) pour machine-outil, l'électro-broche (1) comprenant :
- un corps de broche (10),
- un ensemble rotatif (3) comportant une broche (31) et un rotor (32),
- un stator (2) fixé dans le corps de broche (10) et configuré pour entraîner en rotation l'ensemble rotatif (3) par rapport au corps de broche (10) autour d'un axe (A), et
- un équipement de broche (12-13) et au moins un roulement (5),
- l'ensemble rotatif (3) est creux, et forme un logement (33) s'étendant selon l'axe (A) et traversant au moins en partie le rotor (32), le logement (33) accueillant au moins partiellement l'équipement de broche (12-13), et
- l'ensemble rotatif (3) est guidé en rotation par rapport au corps de broche (10) par le roulement (5)
**caractérisée en ce que**:
le roulement (5) comprend
une bague extérieure (52) fixée sur l'ensemble rotatif (3), et une bague intérieure (51) fixée sur le corps de broche (10).

2. Electro-broche (1) selon la revendication 1, **caractérisée en ce que** l'équipement de broche (12-13) comprend un système de déblocage d'outil (12) fixé sur le corps de broche (10).

3. Electro-broche (1) selon la revendication 1 ou 2, **caractérisée en ce que** l'équipement de broche (12-13) comprend un système d'arrosage de centre broche (13) fixé sur le corps de broche (10).

4. Electro-broche (1) selon l'une quelconque des revendications 1 à 3, **caractérisée en ce que** le corps de broche (10) comprend un carter de support (11), pénétrant dans le logement (33), et **en ce que** l'équipement de broche (12-13) est fixé sur le carter de support (11).

5. Electro-broche (1) selon la revendication 4, **caractérisée en ce que** la bague intérieure (51) est fixée sur le carter de support (11).

6. Electro-broche (1) selon l'une des revendications 1 à 5, **caractérisée en ce que** l'équipement de broche (12-13) est disposé au moins partiellement à l'intérieur du rotor (32).

7. Electro-broche (1) selon la revendication 6, **caractérisée en ce qu'**elle comprend en outre un tirant d'outil (7) situé dans le logement (33).

8. Electro-broche (1) selon l'une quelconque des revendications 1 à 7, **caractérisée en ce que** le rotor (32) est fretté directement sur la broche (31).

## Patentansprüche

1. Elektrospindel (1) für eine Werkzeugmaschine, wobei die Elektrospindel (1) aufweist:
- einen Spindel-Körper (10),
- eine Dreheinheit (3), welche eine Spindel (31) und einen Rotor (32) aufweist,
- einen Stator (2), welcher in dem Spindel-Körper (10) befestigt ist und dazu eingerichtet ist, die Dreheinheit (3) bezüglich des Spindel-Körpers (10) um eine Achse (A) in Rotation zu versetzen, und
- eine Spindel-Einrichtung (12-13) und mindestens ein Lager (5),
- wobei die Dreheinheit (3) hohl ist und eine Aufnahme (33) bildet, welche sich entlang der Achse (A) erstreckt und zumindest teilweise den Rotor (32) durchquert, wobei die Aufnahme (33) zumindest teilweise die Spindel-Einrichtung (12-13) aufnimmt, und
- wobei die Dreheinheit (3) bezüglich des Spindel-Körpers (10) durch das Lager (5) rotationsgeführt ist,
**gekennzeichnet dadurch, dass** das Lager (5) einen Außenring (52), welcher an der Dreheinheit (3) befestigt ist, und einen Innenring (51), welcher an dem Spindel-Körper (10) befestigt ist, aufweist.

2. Elektrospindel (1) gemäß dem Anspruch 1, **gekennzeichnet dadurch, dass** die Spindel-Einrichtung (12-13) ein System zur Freigabe eines Werkzeugs (12), welches an dem Spindel-Körper (10) befestigt ist, aufweist.

3. Elektrospindel (1) gemäß dem Anspruch 1 oder 2, **gekennzeichnet dadurch, dass** die Spindel-Einrichtung (12-13) ein System zur Bewässerung der Spindelmitte (13), welches an dem Spindel-Körper (10) befestigt ist, aufweist.

4. Elektrospindel (1) gemäß irgendeinem der Ansprüche 1 bis 3, **gekennzeichnet dadurch, dass** der Spindel-Körper (10) ein Trägergehäuse (11) aufweist, welches die Aufnahme (33) durchdringt, und dadurch, dass die Spindel-Einrichtung (12-13) an dem Trägergehäuse (11) befestigt ist.

5. Elektrospindel (1) gemäß dem Anspruch 4, **gekennzeichnet dadurch, dass** der Innenring (51) an dem Trägergehäuse (11) befestigt ist.

6. Elektrospindel (1) gemäß irgendeinem der Ansprüche 1 bis 5, **gekennzeichnet dadurch, dass** die Spindel-Einrichtung (12-13) zumindest teilweise im Inneren des Rotors (32) angeordnet ist.

7. Elektrospindel (1) gemäß dem Anspruch 6, **gekennzeichnet dadurch, dass** sie ferner eine Werkzeughalteanker (7), welcher in der Aufnahme (33) angeordnet ist, aufweist.

8. Elektrospindel (1) gemäß irgendeinem der Ansprüche 1 bis 7, **gekennzeichnet dadurch, dass** der Rotor (32) direkt auf die Spindel (31) aufgeschrumpft ist.

## Claims

1. An electric spindle (1) for a machine tool, the electric spindle (1) comprising:
- a spindle body (10),
- a rotary assembly (3) comprising a spindle (31) and a rotor (32),
- a stator (2) fixed inside the spindle body (10) and configured to drive the rotation of the rotary assembly (3) with respect to the spindle body (10) about an axis (A), and
- spindle equipment (12-13) and at least one rolling bearing (5),
- the rotary assembly (3) is hollow, and forms a housing (33) extending along the axis (A) and passing at least in part through the rotor (32), the housing (33) at least partially accommodating the spindle equipment (12-13), and
- the rotary assembly (3) is guided in rotation with respect to the spindle body (10) by the rolling bearing (5),
**characterized in that** the rolling bearing (5) comprises an outer ring (52) fixed to the rotary assembly (3), and an inner ring (51) fixed to the spindle body (10).

2. The electric spindle (1) according to claim 1, **characterized in that** the spindle equipment (12-13) comprises a tool unblocking system (12) fixed on the spindle body (10).

3. The electric spindle (1) according to claim 1 or 2, **characterized in that** the spindle equipment (12-13) comprises a spindle center spraying system (13) fixed on the spindle body (10).

4. The electric spindle (1) according to any one of claims 1 to 3, **characterized in that** the spindle body (10) comprises a support casing (11), penetrating inside the housing (33), and **in that** the spindle equipment (12-13) is fixed on the support casing (11).

5. The electric spindle (1) according to claim 4, **characterized in that** the inner ring (51) is fixed on the support casing (11).

6. The electric spindle (1) according to any one of claims 1 to 5, **characterized in that** the spindle equipment (12-13) is arranged at least partially inside the rotor (32).

7. The electric spindle (1) according to claim 6, **characterized in that** it further comprises a tool tie rod (7) located in the housing (33).

8. The electric spindle (1) according to any one of claims 1 to 7, **characterized in that** the rotor (32) is sintered directly on the spindle (31).
